# EUROPÄISCHE PATENTSCHRIFT

(11) **EP 1 144 153 B1**
(45) Veröffentlichungstag und Bekanntmachung des Hinweises auf die Patenterteilung: **10.11.2004**
(21) Anmeldenummer: 00938649.1
(22) Anmeldetag: 17.05.2000
(51) Int. Cl.: B23Q 1/25

(54) **FESTSTELLEINRICHTUNG ZUM KLEMMEN EINER WELLE ODER STANGE**
LOCKING DEVICE FOR CLAMPING A SHAFT OR ROD
DISPOSITIF DE FIXATION POUR SERRER UN ARBRE OU TUBE

(30) Priorität: 07.06.1999 DE 29909897 U; 23.07.1999 DE 29912919 U
(43) Veröffentlichungstag der Anmeldung: 17.10.2001
(73) Patentinhaber: Frenotech Establishment, 9494 Schaan (LI)
(72) Erfinder: MAINARDI, Gianfranco, CH-9434 Au (CH)
(74) Vertreter: Säger, Manfred, Dipl.-Ing.
(86) Internationale Anmeldenummer: PCT/EP2000/004481
(87) Internationale Veröffentlichungsnummer: WO 2000/074892

(56) Entgegenhaltungen:
- EP-A- 0 197 620
- EP-A- 0 446 694
- EP-A- 0 824 994
- DD-A- 150 638
- DE-A- 3 706 544
- DE-A- 3 810 388
- DE-A- 4 012 524
- DE-C- 19 543 471
- US-A- 4 511 128
- US-A- 4 981 069
- PATENT ABSTRACTS OF JAPAN vol. 010, no. 122 (M-476), 7. Mai 1986 (1986-05-07) -& JP 60 249546 A (MASANORI MOCHIZUKI), 10. Dezember 1985 (1985-12-10)

## Beschreibung

Die Erfindung betrifft eine Feststelleinrichtung gemäß dem Oberbegriff des Anspruchs 1.

Feststelleinrichtungen der vorgenannten Art sind an sich bekannt (beispielsweise US-A-2 806 723, insbesondere Figur 7). Jedoch ist es bei dieser bekannten Feststelleinrichtung von erheblichem Nachteil, daß sie ausschließlich konzentrisch zur zu bremsenden Achse angeordnet werden kann.

Aus diesem Grund sind bereits sich im wesentlichen senkrecht zur zu bremsenden Achse erstreckende Feststelleinrichtungen in Form sogenannter Feststellpatronen entwickelt worden (vgl. beispielsweise DE-A-40 12 524).

Beide vorstehend genannten Ausführungsformen haben jedoch den Nachteil, daß sie keine kompakte Bauweise aufweisen, wodurch ihre Einsatzmöglichkeiten sehr beschränkt sind. Außerdem können die bekannten Feststelleinrichtungen die Achse nicht ohne Spiel klemmen, so daß ein zielgenaues Haltern der Achse nicht möglich ist.

Eine gattungsgemässe Feststellvorrichtung gemäss dem Oberbegriff des Anspruchs 1 ist bekannt (EP-0446694-A1). Sie weist ein einstückiges, im Querschnitt etwa U-förmiges Passstück auf, welches die Achse umfasst, und mit seiner gesamten Innenfläche eine Bremskraft zur Feststellung bis zum Stillstand aufbringen kann.

Von Nachteil an dieser bekannten gattungsgemässen Feststellvorrichtung ist die Einstückigkeit des Passstücks mit den den Klemmbereich aufweisenden zwei Klemmbacken. Dieser Einstückigkeit haftet der Nachteil an, dass beim Lösen mangels genauer geometrischer Vorgaben nicht sichergestellt ist, däss sich das Passstück zuverlässig von der Achse abheben kann und nicht längs dieser bei der Bewegung schleift, was zu einer Beeinträchtigung des Sitzes und nach kurzer Zeit dazu führen kann, dass ein zielgenaues Haltern der Achse und das spielfreie Klemmen nicht mehr möglich ist.

Ausgehend von den vorstehend dargelegten Unzulänglichkeiten der bekannten Feststelleinrichtungen liegt der vorliegenden Erfindung die Aufgabe zugrunde, eine gattungsgemäße Feststelleinrichtung gemäß dem Oberbegriff des Hauptanspruchs so weiterzubilden, daß die Achse spielfrei geklemmt werden kann, wodurch ein zielgenaues Haltern der Achse ermöglicht werden soll.

Diese Aufgabe wird bei einer Feststelleinrichtung gemäß dem Oberbegriff des Hauptanspruchs erfindungsgemäß durch dessen kennzeichnende Merkmale gelöst.

Indem erfindungsgemäss überhaupt eine Kippachse vorgesehen ist und diese sich die des Kipplagers im wesentlichen parallel zur Achsrichtung erstreckt, ist auf für den Fachmann überraschende einfacher Weise in der Feststellage ein gleichmäßiges kraftschlüssiges Angreifen der Klemmbacken an der Achse ohne Spiel und in der anderen Lage der Feststelleinrichtung eine vollständige Freigabe von der Achse gewährleistet. Ausserdem ist die Achse bei der Feststelleinrichtung gemäß der vorliegenden Erfindung infolge der Parallelität von Kippachse und Achsrichtung durch eine vorzugsweise liniengförmige Anlage so gehaltert, dass in der Feststellage praktisch kein Spiel mehr vorliegt. Hierdurch ist ein zielgenaues und spielfreies Haltern der Achse möglich, wenn das Betätigungsglied an den Klemmbacken angreift und diese abhängig von deren Anordnung in der vorzugsweise als Feststellpatrone ausgebildeten Feststelleinrichtung definiert voneinander weg oder aufeinander zu um das jedem Klemmbacken zugeordnete Kipplager bewegt. Mithin befindet sich die Feststelleinrichtung durch diese Bewegung entweder in der in der Feststellage für die Achse oder in der von der Achse freigekommenen Freigabelage, wobei in ersterer der Klemmbereich kraft- und/oder reibungsschlüssig an der Achse angreift. Das Kipplager ist mit Vorteil als Vertiefung, z.B. als Bohrung im Boden des Gehäuses ausgebildet, in die der von dem Betätigungsglied abgewandte, der Vertiefung angepaßte Endbereich jedes Klemmbackens im wesentlichen ohne Spiel eingreift, so daß sich die Klemmbacken einerseits zum Klemmen rechtwinklig zu der Kippachse in der Vertiefung abstützen können. Andererseits können die Klemmbacken auch Kräfte in Richtung der Kippachse, z.B. längs der Achse aufnehmen und sich auch in dieser Richtung an dem Rand der Vertiefung abstützen, was zu einem leichten Kippen der Klemmbacken um eine zu der Kippachse rechtwinklige Achse und damit zu einer zusätzlichen Haltekraft, auch gegen Drehen der Achse durch Verkanten führt. Hierbei wird der Fachmann bei der Lösung gemäß der erfindungsgemäßen Lehre des weiteren auch die günstigen Hebelverhältnisse zwischen dem Angriffspunkt des Betätigungsglieds an den Klemmbacken, der Kippachse des Kipplagers und dem Angriffspunkt der Klemmbacken an der Achse zu schätzen wissen. Diese günstigen Hebelverhältnisse erlauben bei beispielsweise pneumatischer Betätigung des Betätigungskolbens mittels eines Fluids eine optimale Kraftübertragung auf die Klemmbacken, so daß der Klemmbereich in der Feststellage zu einer intensiven kraftschlüssigen Anlage an der Achse kommt. Hierbei ist der Klemmbereich in der Feststellage zur linienförmig oder punktuell klemmenden Anlage an der Oberfläche der Achse bestimmt, wobei die linienförmige Anlage dann vorteilhaft ist, wenn zueinander sowie zur Ausrichtung der Kippachse parallel verlaufende linienförmige Vorsprünge vorgesehen werden. Ohne Einwirken des Betätigungsglieds auf die Klemmbacken werden diese von der Kraft der Feder aufeinander zu gedrückt, so daß sich die Klemmbacken um das Kipplager gekippt aufeinander zu bewegen. Der Klemmbereich, der die Achse mit geringem Spiel umgreift, klemmt in dieser ausschließlich von der Kraft der Feder bewirkten Feststellage die Achse, so daß ein "Lösen mit Druck" erfolgt, das heißt die Klemmbacken sind in der Feststellage von der Kraft der Feder aufeinander zu gedrückt.

Weitere zweckmäßige Ausgestaltungen und vorteilhafte Weiterbildungen der vorliegenden Erfindung sind in den Unteransprüchen gekennzeichnet.

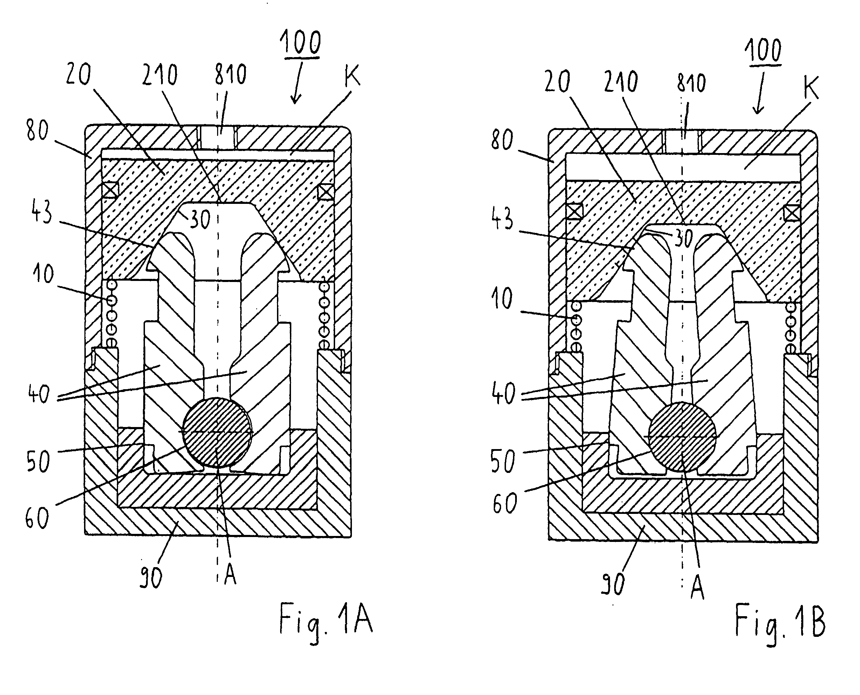

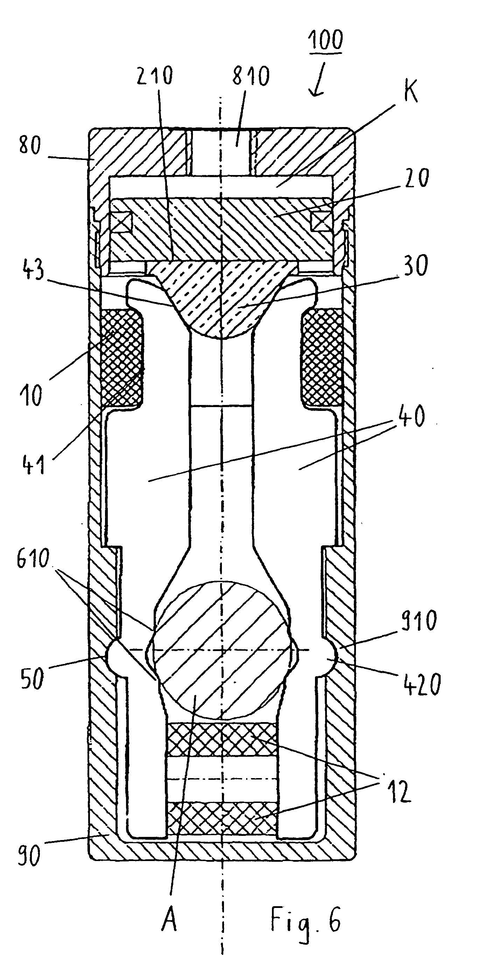

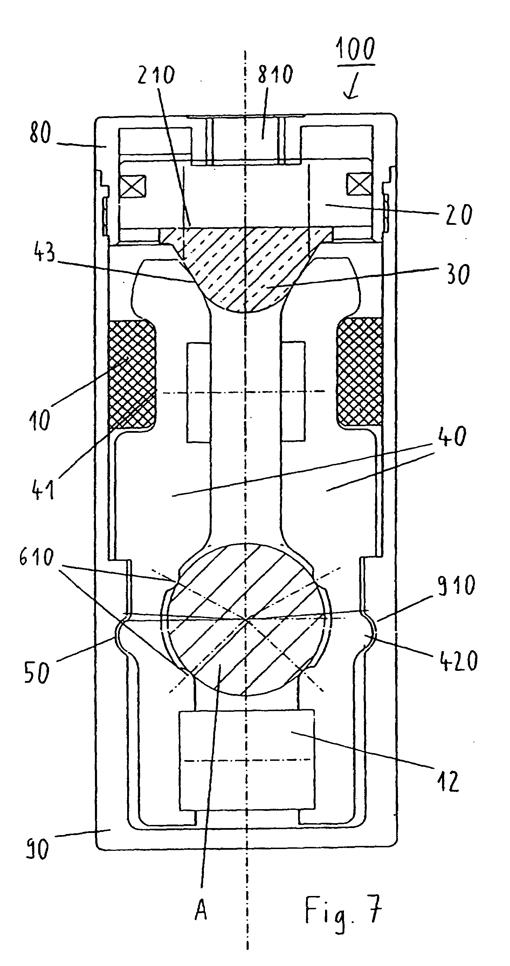

Ausführungsbeispiele ergeben sich aus der nachfolgenden Beschreibung bevorzugter Ausführungsbeispiele der Erfindung gemäss den Figuren 6 und 7 der Zeichnung, wobei sich die Figuren 1 bis einschliesslich 5 nicht auf Ausführungsformen der Erfindung beziehen. In der Zeichnung zeigt:
- Fig. 1A: ein erstes Ausführungsbeispiel einer als Feststellpatrone ausgebildeten, sich in der Freigabelage befindlichen Feststelleinrichtung, im schematischen Querschnitt;
- Fig. 1B: die Feststelleinrichtung aus Fig. 1A in der Feststellage;
- Fig. 2A: ein zweites Ausführungsbeispiel einer als Feststellpatrone ausgebildeten, sich in der Freigabelage befindlichen Feststelleinrichtung, im schematischen Querschnitt;
- Fig. 2B: die Feststelleinrichtung aus Fig. 2A in der Feststellage;
- Fig. 3A: ein drittes Ausführungsbeispiel einer als Feststellpatrone ausgebildeten, sich in der Freigabelage befindlichen Feststelleinrichtung im Einsatz bei einem Anbauteil für einen Zylinder, im schematischen Querschnitt;
- Fig. 3B: die Feststelleinrichtung aus Fig. 3A in der Feststellage;
- Fig. 4: die Feststelleinrichtung aus Fig. 3A und 3B im Einsatz beim Anbauteil für einen Zylinder, in seitlicher Aufsicht entlang der Linie IV - IV aus Fig. 3B;
- Fig. 5: ein viertes Ausführungsbeispiel einer als Feststellpatrone ausgebildeten Feststelleinrichtung, im schematischen Querschnitt;
- Fig. 6: ein fünftes Ausführungsbeispiel einer als Feststellpatrone ausgebildeten Feststelleinrichtung gemäß der Erfindung, im schematischen Querschnitt; und
- Fig. 7: ein sechstes Ausführungsbeispiel einer als Feststellpatrone ausgebildeten Feststelleinrichtung gemäß der Erfindung, im schematischen Querschnitt.

Identische Bezugszeichen beziehen sich auf gleiche oder ähnliche Ausgestaltungen, Elemente oder Merkmale in den Figuren 1A bis 7.

In den Figuren 1A und 1B ist ein erstes Ausführungsbeispiel einer als Feststellpatrone ausgebildeten Feststelleinrichtung im Einsatz bei einem Anbauteil 100 für einen Zylinder im schematischen Querschnitt gezeigt.

Bei diesem ersten Ausführungsbeispiel ist das Anbauteil 100 aus einer Hülse 80 und einem Gehäuse 90 zusammengesetzt, wobei das Gehäuse 90 des Anbauteils 100 eine an die Form der Hülse 80 angepaßte Ausnehmung zum Aufnehmen der Feststelleinrichtung aufweist. In diesem Zusammenhang ist die Feststelleinrichtung in Figur 1A in ihrer Freigabelage dargestellt, wohingegen in Figur 1B die Feststellage veranschaulicht ist.

Diese Feststelleinrichtung dient zum Feststellen einer Achse A, die in den Figuren 1A und 1B eine sich in die Zeichenebene hinein erstreckende Achsrichtung sowie einen gegebenen Durchmesser aufweist. Bei der Achse A kann es sich beispielsweise um eine fest angeordnete Stange oder um eine sich drehende Welle handeln.

Im Kolbenraum K der Hülse 80 ist ein Betätigungskolben 20 untergebracht, der über ein Fluid betätigbar ist. Zur Betätigung mittels des Fluids ist am (in den Figuren 1A und 1B oberen) Ende der Hülse 80 eine Zuführöffnung 810 vorgesehen, mittels der der Kolbenraum K mittels des Fluids, vorzugsweise in pneumatischer Weise, beaufschlagt werden kann, so daß der Betätigungskolben 20 im Kolbenraum K abwärts und aufwärts bewegbar ist.

Aus den Figuren 1A und 1B geht in diesem Zusammenhang des weiteren hervor, daß der Betätigungskolben 20 auf seiner vom Kolbenraum K abgewandten Seite eine im wesentlichen quer zu seiner abwärts und aufwärts orientierten Hubrichtung verlaufende Stützebene 210 aufweist, die im wesentlichen rechtwinklig zur Hubrichtung verläuft.

Gemäß dem ersten Ausführungsbeispiel der Figuren 1A und 1B ist des weiteren ein vom Betätigungskolben 20 bewegbares Betätigungsglied 30 vorgesehen, das in den Figuren 1A und 1B einstückig mit dem Betätigungskolben 20 ausgebildet ist und die Form einer Ausnehmung nach Art eines Kegelstumpfes aufweist. Dieses Betätigungsglied 30 ist zum Angreifen an zwei Klemmbacken 40 bestimmt, deren jeweiliges freies Ende dem Betätigungsglied 30 zugeordnet ist und die durch die Abwärtsbewegung des Betätigungskolbens 20 mit Betätigungsglied 30 aufeinander zu bewegt werden (vgl. Übergang von Figur 1A auf Figur 1B), indem das Betätigungsglied 30 mit abgeschrägten Steuerflächen 43 der Klemmbacken 40 zusammenwirkt.

Entsprechend werden die beiden Klemmbacken 40 voneinander weg bewegt, wenn bei nachlassender oder verschwindender Beaufschlagung mit dem Fluid der Betätigungskolben 20 mit Betätigungsglied 30 durch die Rückstellkraft einer Feder 10 wieder aufwärts bewegt wird (vgl Übergang von Figur 1B auf Figur lA).

Die Bewegung der Klemmbacken 40 aufeinander zu und voneinander weg erfolgt um jeweils ein jeder Klemmbacke 40 zugeordnetes Kipplager 50 von einer Freigabelage für die Achse A (vgl. Figur 1A) in eine Feststellage für die Achse A (vgl. Figur 1B) und zurück. Die in Figur 1B dargestellte Feststellage wird hierbei im wesentlichen durch einen im vom Betätigungsglied 30 abgewandten Endbereich der Klemmbacken 40 vorgesehenen Klemmbereich 60 zum kraftschlüssigen Angriff an der Achse A definiert, wobei der Klemmbereich 60 in der Feststellage zur flächig klemmenden Anlage an der Oberfläche der Achse A bestimmt ist.

Hierzu weisen die Klemmbacken 40 im Angriffsbereich für die Achse A Ausnehmungen auf, die an die Form der Oberfläche der Achse A angepaßt sind und durch die der Klemmbereich 60 gebildet ist. Mithin ist der Klemmbereich 60 gewissermaßen als Schmiegefläche zum Schmiegen an den zylinderförmigen Mantel der Achse A mit etwa dem gegebenen Durchmesser ausgebildet.

Hinsichtlich des Funktionsmechanismus zwischen Freigabelage (vgl. Figur 1A) und Feststellage (vgl. Figur 1B) ist beim ersten Ausführungsbeispiel von Bedeutung, daß sich die Kippachsen der Kipplager 50 im wesentlichen parallel zur Achsrichtung der Achse A erstrecken, wodurch in der Feststellage (vgl. Figur 1B) ein kraftschlüssiges mittelbares oder unmittelbares Angreifen der Klemmbacken 40 an der Achse A gewährleistet ist. Das Kipplager kann bei allen Ausführungsformen eine als Bohrung ausgebildete Vertiefung und im Inneren des Gehäuses an dem von dem Betätigungsglied abgewandten Endbereich der Klemmbacken vorgesehen sein, die in diesem Bereich an die Form der Vertiefung angepaßt ist.

Hierbei unterscheidet sich die Feststelleinrichtung gemäß dem ersten Ausführungsbeispiel von anderen Feststelleinrichtungen dadurch, daß bei letzteren lediglich der Rand jeder für die Achse bestimmten Durchgangsöffnung durch die Kraft der Feder an der Achse zu liegen kommt und bei einer Bewegung der Achse diese in eine selbsthemmende Sperrlage bringt, wohingegen die Achse A bei der in den Figuren 1A und 1B dargestellten Feststelleinrichtung infolge der Parallelität von Kippachse 50 und Achsrichtung der Achse A nicht nur durch den Rand, sondern vollflächig durch den Klemmbereich 60 arretiert ist, so daß in der Feststellage (vgl. Figur 1B) praktisch kein Spiel mehr vorkommt. Hierdurch ist ein zielgenaues Haltern der Achse A möglich, die gewissermaßen zwischen den beiden seitlich abgestützten Kipplagern 50 der Klemmbacken 40 verläuft.

Hierbei wirken sich bei der ersten Ausführungsform der vorliegenden Feststelleinrichtung auch die Hebelverhältnisse zwischen dem Angriffspunkt des Betätigungsglieds 30 an den Klemmbacken 40, der Kippachse des Kipplagers 50 und dem Angriffspunkt der Klemmbacken 40 an der Achse A günstig aus. Diese günstigen Hebelverhältnisse erlauben bei pneumatischer Betätigung des Betätigungskolbens 20 mittels des Fluids eine optimale Kraftübertragung auf die Klemmbacken 40, so daß der Klemmbereich 60 in der Feststellage (vgl. Figur 1B) zu einer intensiven kraftschlüssigen Anlage an der Achse A kommt.

Wie der Darstellung der Figuren 1A und 1B entnehmbar ist, ist zu vorgenanntem Zweck der Hebelarm zwischen dem Angriffspunkt des Betätigungsglieds 30 an den Klemmbacken 40 und der Kippachse des Kipplagers 50 wesentlich größer als der Hebelarm zwischen der Kippachse des Kipplagers 50 und dem Angriffspunkt der Klemmbacken 40 an der Achse A gewählt.

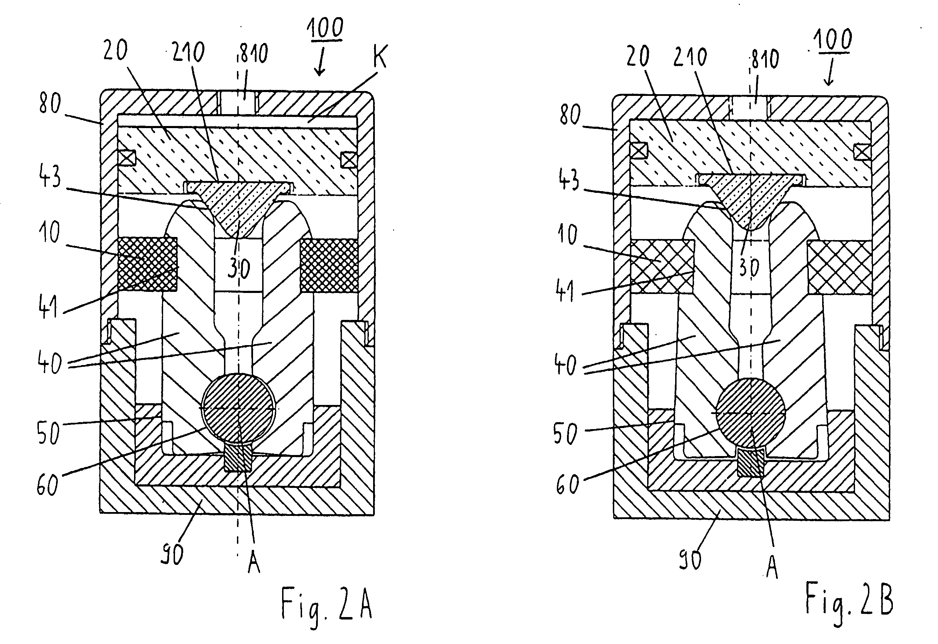

In den Figuren 2A und 2B ist ein zweites Ausführungsbeispiel einer als Feststellpatrone ausgebildeten Feststelleinrichtung. In diesem Zusammenhang ist die Feststelleinrichtung in Figur 2A in ihrer Freigabelage dargestellt, wohingegen in Figur 2B die Feststellage veranschaulicht ist.

Zur Vermeidung überflüssiger Wiederholungen wird nachfolgend lediglich auf die Ausgestaltungen, Elemente oder Merkmale eingegangen, durch die sich das in den Figuren 2A und 2B dargestellte zweite Ausführungsbeispiel vom in den Figuren 1A und 1B gezeigten ersten Ausführungsbeispiel unterscheidet:

Hierzu ist zunächst zu bemerken, daß beim ersten Ausführungsbeispiel ein "Halten mit Druck" erfolgt, wohingegen beim zweiten Ausführungsbeispiel ein "Lösen mit Druck" erfolgt. Dies bedeutet, daß in der Feststellage (vgl. Figur 2B) des zweiten Ausführungsbeispiels die Klemmbacken 40 von der Kraft der um die Klemmbacken 40 herumgelegten Feder 10 aufeinander zu gedrückt sind, wobei die Feder 10 als vollständig geschlossener Ring ausgebildet ist, der in einer umlaufenden Nut 41 der Klemmbacken 40 eingelegt ist.

Im zweiten Ausführungsbeispiel gemäß den Figuren 2A und 2B ist des weiteren ein vom Betätigungskolben 20 bewegbares Betätigungsglied 30 vorgesehen, das nasenförmig ausgebildet ist und mit dem Betätigungskolben 20 in fester Verbindung steht.

Dieses Betätigungsglied 30 ist zum Angreifen an den zwei Klemmbacken 40 bestimmt, deren freies Ende dem Betätigungsglied 30 zugeordnet ist und die durch die Aufwärtsbewegung des Betätigungskolbens 20 mit Betätigungsglied 30 aufeinander zu bewegt werden (vgl. Übergang von Figur 2A auf Figur 2B), indem das Betätigungsglied 30 mit abgeschrägten Steuerflächen 43 der Klemmbacken 40 zusammenwirkt.

Hierbei werden die beiden Klemmbacken 40 durch die Rückstellkraft der Feder 10 aufeinander zu bewegt, wenn bei nachlassender oder verschwindender Beaufschlagung mit dem Fluid der Betätigungskolben 20 mit Betätigungsglied 30 wieder aufwärts bewegt wird (vgl. Übergang von Figur 2A auf Figur 2B), so daß durch die Bewegung der Klemmbacken 40 aufeinander zu der Übergang von der Freigabelage für die Achse A (vgl. Figur 2A) in die Feststellage für die Achse A (vgl. Figur 2B) bewerkstelligt wird.

Die in Figur 2B dargestellte Feststellage wird hierbei im wesentlichen durch den im vom Betätigungsglied 30 abgewandten Endbereich der Klemmbacken 40 vorgesehenen Klemmbereich 60 zum kraftschlüssigen Angriff an der Achse A definiert, wobei der Klemmbereich 60 in der Feststellage zur flächig klemmenden Anlage an der Oberfläche der Achse A bestimmt ist.

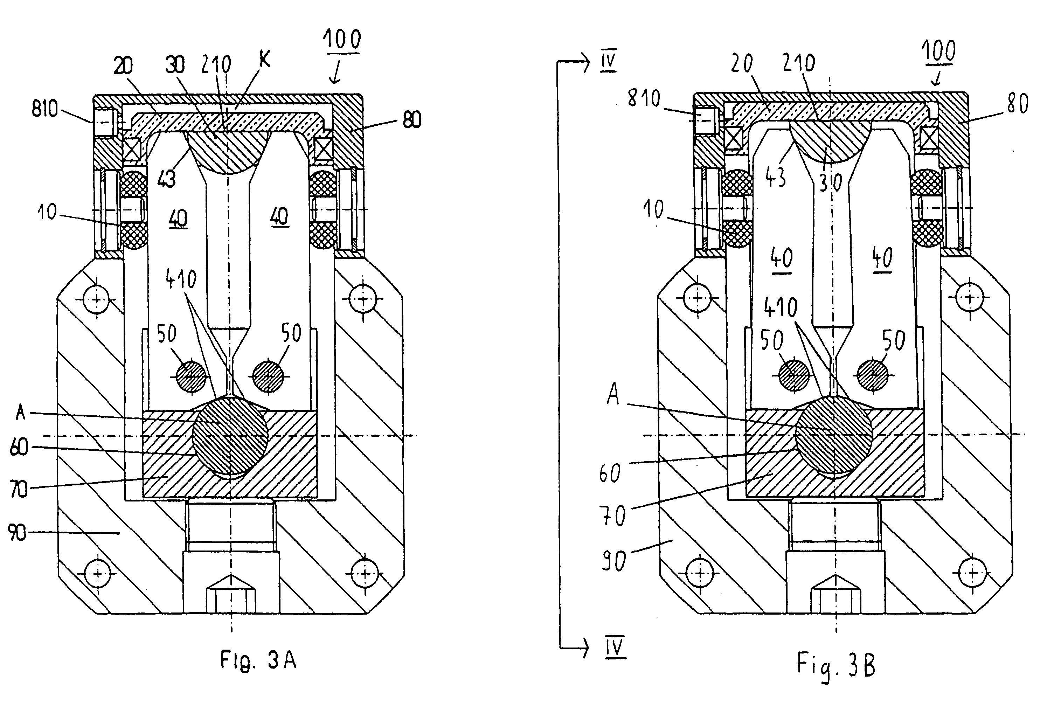

In den Figuren 3A und 3B ist ein drittes Ausführungsbeispiel einer als Feststellpatrone ausgebildeten Feststelleinrichtung gezeigt. In diesem Zusammenhang ist die Feststelleinrichtung in Figur 3A in ihrer Freigabelage dargestellt, wohingegen in Figur 3B die Feststellage veranschaulicht ist.

Zur Vermeidung überflüssiger Wiederholungen wird nachfolgend lediglich auf die Ausgestaltungen, Elemente oder Merkmale eingegangen, durch die sich das in den Figuren 3A und 3B dargestellte dritte Ausführungsbeispiel von den in den Figuren 1A und 1B sowie 2A und 2B gezeigten ersten beiden Ausführungsbeispielen unterscheidet:

Wie der Darstellung der Figuren 3A und 3B entnehmbar ist, ist im Gehäuse 90 ein die Achse A teilweise mit geringem Spiel umgebendes Paßstück 70 untergebracht, das angrenzend an den vom Betätigungsglied 30 abgewandten Endbereich der Klemmbacken 40 angeordnet ist. Es bedarf in diesem Zusammenhang einer besonderen Erwähnung, daß es das Paßstück 70 ist, das den Klemmbereich 60 aufweist:

Hierzu weist das Paßstück 70 im Angriffsbereich für die Achse A eine Ausnehmung auf, die an die Form der Oberfläche der Achse A angepaßt sind und durch die der Klemmbereich 60 gebildet ist. Mithin ist der Klemmbereich 60 gewissermaßen als Schmiegefläche zum Schmiegen an den zylinderförmigen Mantel der Achse A mit etwa dem gegebenen Durchmesser ausgebildet.

Geht nun die Feststelleinrichtung gemäß dem dritten Ausführungsbeispiel von der Freigabelage für die Achse A (vgl. Figur 3A) gegen die Rückstellkraft der seitlich an der Hülse 80 abgestützten Feder 10 (in den Figuren 3A und 3B in der Form zweier O-Ringe aus Kunststoff) in die Feststellage für die Achse A (vgl. Figur 3B) über, so wird das Paßstück durch die Bewegung der Klemmbacken 40 innerhalb des Gehäuses 90 leicht angehoben und gegen die Achse A gedrückt, die in der Feststellage (vgl. Figur 3B) infolge der Parallelität von Kippachse 50 und Achsrichtung der Achse A nicht nur durch den Rand, sondern vollflächig durch den Klemmbereich 60 arretiert ist, so daß in der Feststellage (vgl. Figur 3B) praktisch kein Spiel mehr vorkommt. Hierdurch ist ein zielgenaues Haltern der Achse A zwischen den abgeschrägten Endflächen 410 der Klemmbacken 40 und dem Paßstück 70 möglich.

Das dritte Ausführungsbeispiel unterscheidet sich auch hinsichtlich der Betätigung des Betätigungskolbens 20 von den ersten beiden Ausführungsbeispielen:

Zur Betätigung mittels des Fluids ist an der (in den Figuren 3A und 3B linken) Seite der Hülse 80 eine Zuführöffnung 810 vorgesehen, mittels der der Kolbenraum K mittels des Fluids, vorzugsweise in pneumatischer Weise, beaufschlagt werden kann, so daß der Betätigungskolben 20 im Kolbenraum K abwärts und aufwärts bewegbar ist. Im Unterschied zu den ersten beiden Ausführungsbeispielen erfolgt die Zuführung und die Abführung des Fluids in den Figuren 3A und 3B mithin lateral, nicht zentral.

Schließlich sei noch darauf hingewiesen, daß das Betätigungsglied 30 mit seiner dem Betätigungskolben 20 zugewandten Rückseite eben ausgebildet und lose schwimmend auf der Stützebene 210 des Betätigungskolbens 20 abgestützt ist. Hierbei verläuft die eben ausgebildete Rückseite des Betätigungsglieds 30 im wesentlichen rechtwinklig zur Hubrichtung des Betätigungskolbens 20.

Durch diese lose schwimmende Abstützung des Betätigungsglieds 30 auf der Stützebene 210 des Betätigungskolbens 20 kann der Betätigungskolben 20 eine geringe Bauhöhe aufweisen, ohne daß die Gefahr besteht, daß sich der Betätigungskolben 20 bei seiner Betätigung verkantet, wodurch die Funktionsfähigkeit beeinträchtigt wäre; es wird demzufolge ein Verkanten des Betätigungskolbens 20 mit Betätigungsglied 30 bei der Abwärts- und Aufwärtsbewegung im Kolbenraum K in zuverlässiger Weise verhindert.

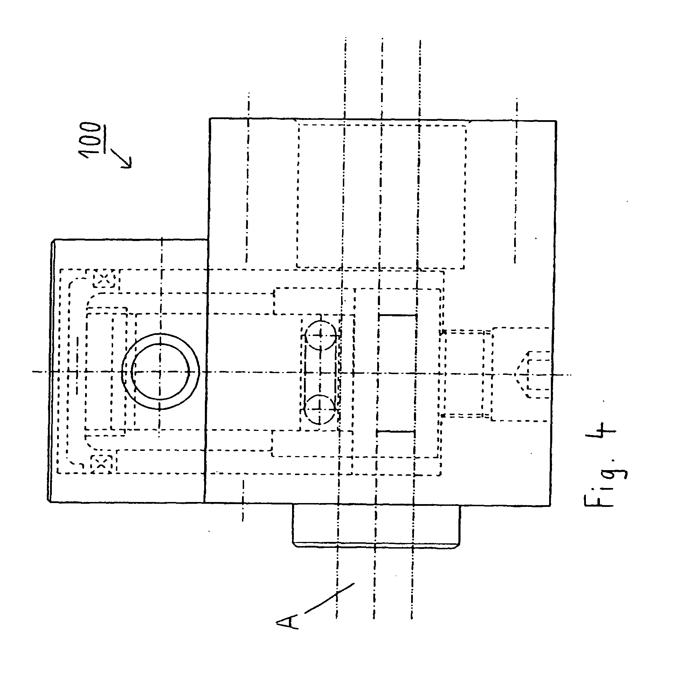

In Figur 4 ist die Feststelleinrichtung aus den Figuren 3A und 3B im Einsatz beim Anbauteil 100 für einen Zylinder in seitlicher Aufsicht entlang der Linie IV - IV aus Figur 3B gezeigt.

Zur Vermeidung überflüssiger Wiederholungen wird hinsichtlich der Ausgestaltungen, Elemente oder Merkmale auf die vorstehenden Erläuterungen zu den Figuren 3A und 3B verwiesen.

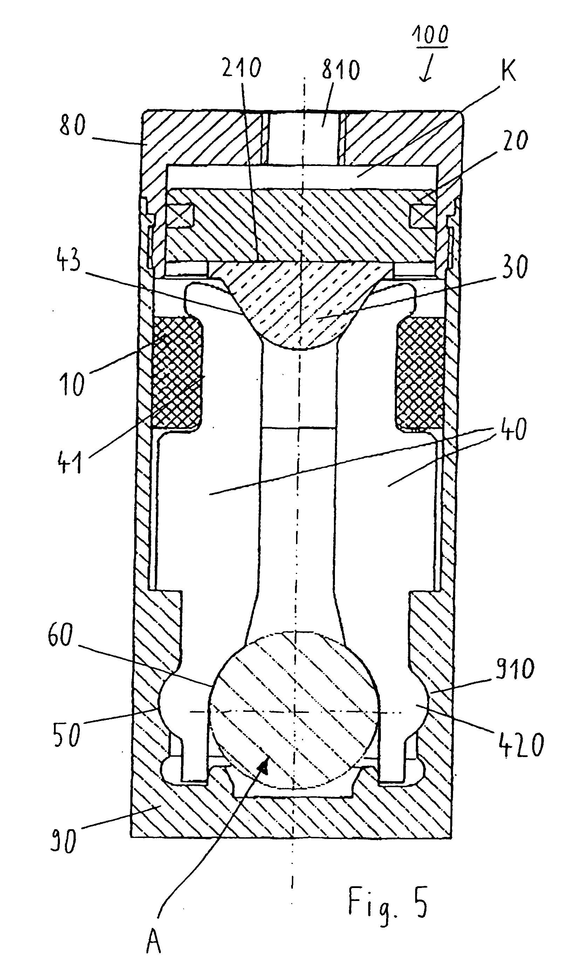

In Figur 5 ist ein viertes Ausführungsbeispiel einer als Feststellpatrone ausgebildeten Feststelleinrichtung gezeigt.

Zur Vermeidung überflüssiger Wiederholungen wird nachfolgend lediglich auf die Ausgestaltungen, Elemente oder Merkmale eingegangen, durch die sich das in Figur 5 dargestellte vierte Ausführungsbeispiel von den in den Figuren 1A bis 4 gezeigten ersten drei Ausführungsbeispielen unterscheidet:

Beim vierten Ausführungsbeispiel, das hinsichtlich Aufbau, Ausgestaltung, Funktion und Struktur dem in den Figuren 2A und 2B dargestellten zweiten Ausführungsbeispiel ähnelt, werden besonders günstige Hebelwirkungen erzielt, indem der Klemmbereich 60 im vom Betätigungsglied 30 abgewandten Endbereich der Klemmbacken 40 vorgesehen ist. Unter anderem hierdurch wird erreicht, daß der Hebelarm zwischen dem Angriffspunkt des Betätigungsglieds 30 an den Klemmbacken 40 und der Kippachse des Kipplagers 50 wesentlich größer als der Hebelarm zwischen der Kippachse des Kipplagers 50 und dem Angriffspunkt der Klemmbacken 40 an der Achse A ist.

Die Hebelverhältnisse werden bei dem in Figur 5 gezeigten vierten Ausführungsbeispiel zusätzlich noch dadurch begünstigt, daß das Gehäuse 90 des Anbauteils 100 für einen Zylinder eine an die außenliegende Form der Klemmbacken 40 angepaßte Ausbuchtung zum Aufnehmen des Bereichs des Kipplagers 50 aufweist.

Die vorstehend beschriebenen, überaus vorteilhaften Hebelverhältnisse erlauben bei pneumatischer Betätigung des Betätigungskolbens 20 mittels des Fluids eine optimale Kraftübertragung auf die Klemmbacken 40, so daß der Klemmbereich 60 in der Feststellage zu einer intensiven kraftschlüssigen Anlage an der Achse A kommt.

In Figur 6 ist ein fünftes Ausführungsbeispiel einer als Feststellpatrone ausgebildeten Feststelleinrichtung gemäß der vorliegenden Erfindung gezeigt.

Zur Vermeidung überflüssiger Wiederholungen wird nachfolgend lediglich auf die Ausgestaltungen, Elemente oder Merkmale eingegangen, durch die sich das in Figur 6 dargestellte fünfte Ausführungsbeispiel von den in den Figuren 1A bis 5 gezeigten ersten vier Ausführungsbeispielen unterscheidet:

Beim erfindungsgemässen fünften Ausführungsbeispiel, das hinsichtlich Aufbau, Ausgestaltung, Funktion und Struktur dem in Figur 5, dargestellten nicht erfindungsgemässen vierten Ausführungsbeispiel der vorliegenden Erfindung ähnelt, weist der Klemmbereich 60 auf der Innenseite jeder Klemmbacke 40 jeweils zwei nasenförmig ausgebildete Vorsprünge 610 zur linienförmig oder punktuell klemmenden Anlage an den zylinderförmigen Mantel der Achse A mit etwa dem gegebenen Durchmesser auf. Hierdurch liegt der Klemmbereich 60 in der Feststellage mit insgesamt vier Punkten an der Oberfläche der Achse A an, so daß die Achse A in sicherer Weise durch den Klemmbereich 60 arretiert ist, wodurch eine praktisch spielfreie Feststellage herbeigeführt ist.

Des weiteren ist bei dem in Figur 6 gezeigten erfindungsgemässen fünften Ausführungsbeispiel eine schraubenförmig ausgebildete Feder 12 im vom Betätigungsglied 30 abgewandten Endbereich der Klemmbacken 40 vorgesehen, wobei die Feder 12 zwischen den vom Betätigungsglied 30 abgewandten Enden der Klemmbacken 40 angeordnet ist. Hierbei ist die Feder 12 so angeordnet, daß die Klemmbacken 40 von der Kraft der Feder 12 voneinander weg gedrückt sind.

In diesem Zusammenhang macht es hinsichtlich der im vom Betätigungsglied 30 abgewandten Endbereich der Klemmbacken 40 vorgesehenen Feder 12 keinen Unterschied, ob die Funktionsweise der Feststelleinrichtung auf dem in den Figuren 1A und 1B veranschaulichten Prinzip "Halten mit Druck" oder auf dem in den Figuren 2A, 2B, 3A, 3B, 5 und 6 veranschaulichten Prinzip "Lösen mit Druck" basiert.

Vielmehr ist die Anordnung dieser Feder 12 insbesondere im in Figur 6 dargestellten Fall zweckmäßig, in dem aufgrund entsprechender Anordnung des Kipplagers 50 durch die Klemmbacken 40 jeweils ein zweiarmiger Hebel gebildet ist, so daß durch das Zusammenspiel der im dem Betätigungsglied 30 zugewandten Endbereich der Klemmbacken 40 vorgesehenen Feder 10 und der im vom Betätigungsglied 30 abgewandten Endbereich der Klemmbacken 40 vorgesehenen Feder 12 in Abhängigkeit von der Ausgestaltung und vom Zusammenwirken des Betätigungsglieds 30 mit den abgeschrägten Steuerflächen 43 der Klemmbacken 40 ein "Lösen mit Druck" ermöglicht ist.

In Figur 7 ist ein erfindungsgemässes sechstes Ausführungsbeispiel einer als Feststellpatrone ausgebildeten Feststelleinrichtung gemäß der vorliegenden Erfindung gezeigt.

Zur Vermeidung überflüssiger Wiederholungen wird nachfolgend lediglich auf die Ausgestaltungen, Elemente oder Merkmale eingegangen, durch die sich das in Figur 7 dargestellte sechste Ausführungsbeispiel von den in den Figuren 1A bis 6 gezeigten ersten fünf Ausführungsbeispielen unterscheidet:

Beim erfindungsgemässen sechsten Ausführungsbeispiel, das hinsichtlich Aufbau, Ausgestaltung, Funktion und Struktur dem in Figur 6 dargestellten fünften erfindungsgemässen Ausführungsbeispiel ähnelt, ist im dem Betätigungsglied 30 zugewandten inneren Endbereich der Klemmbacken 40 eine Möglichkeit vorgesehen, die Feder 10 zwischen den Klemmbacken 40 anzuordnen, welcher Fall nachfolgend ausgeführt werden soll:

In diesem Fall könnten die Klemmbacken 40 von der Kraft der Feder 10 in zum "Lösen mit Druck" (vgl. Figuren 2A, 2B, 3A, 3B, 5, 6 und 7) alternativer Weise voneinander weg gedrückt werden. In diesem Fall erfolgte mithin ein "Halten mit Druck" (vgl. Figuren 1A und 1B), das heißt die Klemmbacken 40 würden in der Feststellage von der Kraft der Feder 10 voneinander weg gedrückt, wobei die Feder 10 zwischen den dem Betätigungsglied 30 zugewandten Enden der Klemmbacken 40 angeordnet wäre.

Ohne Einwirken des Betätigungsglieds 30 auf die Klemmbacken 40 würden die Klemmbacken 40 gemäß der Ausführungsform "Halten mit Druck" (vgl. Figuren 1A und 1B) mithin von der Kraft der Feder 10 aufeinander zu gedrückt, so daß sich die Klemmbacken 40 um das Kipplager 50 aufeinander zu bewegen. Der Klemmbereich 60 mit seinen insgesamt vier nasenförmig ausgebildeten Vorsprüngen 610, die zur linienförmig oder punktuell klemmenden Anlage an den zylinderförmigen Mantel der Achse A mit etwa dem gegebenen Durchmesser vorgesehen sind, umgreift die Achse A mit geringem Spiel und klemmt in dieser von der Kraft der Feder 10 bewirkten Feststellage die Achse A.

Wie den Figuren 1A bis 7 entnehmbar ist, sind bei den sechs gezeigten Ausführungsbeispielen Teile der Klemmbacken 40, das Kipplager 50 und der Klemmbereich 60 in einem Gehäuse 90 untergebracht, wobei durch dieses Gehäuse 90, das eine Ausnehmung zum Aufnehmen der Feststelleinrichtung aufweist, sowohl eine Führung als auch ein Schutz der betreffenden Komponenten der Feststelleinrichtung gewährleistet ist.

Hierbei geht aus Figur 4 hervor, daß das Gehäuse 90 einem Anbauteil 100 für einen Zylinder zugeordnet ist. Die Form der Hülse 80 ist an die Form des Gehäuses 90 angepaßt, so daß die Hülse 80 und das Gehäuse 90 in praktischer Weise zum Anbauteil 100 zusammenfügbar sind.

Bei den in den Figuren 6 bis 7 gezeigten Ausführungsbeispielen weist das Gehäuse 90 an die Form der Klemmbacken 40 angepaßte Aussparungen 910 auf, die zum Aufnehmen der Kipplager 50 vorgesehen sind. Hinsichtlich der konstruktiven Ausgestaltung der Aussparungen 910 ist hierbei festzustellen, daß der jeweilige Mittelpunkt der Aussparungen 910 in Richtung der Symmetrieachse der Feststelleinrichtung, und hierbei bei den beiden in den Figuren 6 und 7 gezeigten Ausführungsbeispielen in Richtung zum geschlossenen Ende des Gehäuses 90 hin, versetzt zum Mittelpunkt der Achse A angeordnet ist.

Hierdurch werden bei den in den Figuren 6 bis 7 gezeigten Ausführungsbeispielen besonders günstige Hebelverhältnisse geschaffen, wobei der Hebelarm zwischen dem Angriffspunkt des Betätigungsglieds 30 an den Klemmbacken 40 und der Kippachse des Kipplagers 50 wesentlich größer als der Hebelarm zwischen der Kippachse des Kipplagers 50 und dem Angriffspunkt der Klemmbacken 40 ist.

Bei den beiden in den Figuren 6 und 7 gezeigten Ausführungsbeispielen der Erfindung ist die Aussparung 910 jeweils mit einem Innengewinde versehen. Da die Gewindegänge dieses Innengewindes im wesentlichen parallel zur Richtung der Symmetrieachse der Feststelleinrichtung orientiert sind, sind die den Gewindegängen des Innengewindes zugewandten Außenflächen der Klemmbacken 40 partiell mit Rillen versehen, die zu den Gewindegängen des Innengewindes im wesentlichen parallel orientiert sind und die in diese Gewindegänge des Innengewindes eingreifen.

Dies hat den Vorteil, daß in Achsrichtung durch das Innengewinde und die Rillen ein Widerlager zum spielfreien Aufnehmen der Feststelleinrichtung gebildet ist, das heißt durch das Vorsehen des Innengewindes mit seinen Gewindegängen in Wirkverbindung mit den Rillen wird ein seitliches Verschieben der Feststelleinrichtung in bezug auf das Gehäuse 90 in zuverlässiger Weise verhindert, was der Feststelleinrichtung mit Gehäuse 90 angesichts der beim Feststellen, beim Halten und beim Lösen der Achse A wirkenden radialen und tangentialen Kräfte eine hohes Maß an Betriebssicherheit verleiht.

Hierbei weisen die Klemmbacken 40 bei den beiden in den Figuren 6 und 7 gezeigten Ausführungsbeispielen (vgl. hierzu auch Figur 5) im Bereich des Kipplagers 50 jeweils eine Ausbuchtung 420 auf. In diesem Zusammenhang ist ein besonders günstiges Zusammenwirken der Aussparung 910 und der Ausbuchtung 420 der Klemmbacken 40 dadurch gewährleistet, daß die Form der Aussparung 910 in etwa an die Form der Ausbuchtung 420 angepaßt ist und daß sich die Aussparung 910 und die Ausbuchtung 420 in etwa komplementär ergänzen. Hierdurch ist eine besonders überzeugende Möglichkeit geschaffen, das Kipplager 50 im Bereich zwischen Aussparung 910 und Ausbuchtung 420 zu definieren.

Da die Aussparung 910 bei den beiden in den Figuren 6 und 7 gezeigten Ausführungsbeispielen nach der Erfindung mit einem Innengewinde versehen ist, dessen Gewindegänge im wesentlichen parallel zur Richtung der Symmetrieachse der Feststelleinrichtung orientiert sind, sind die den Gewindegängen des Innengewindes zugewandten Ausbuchtungen 420 der Klemmbacken 40 mit Rillen versehen, die zu den Gewindegängen des Innengewindes im wesentlichen parallel orientiert sind und die in diese Gewindegänge des Innengewindes eingreifen, denn dies hat den Vorteil, daß in Achsrichtung durch das Innengewinde und die Rillen ein Widerlager zum spielfreien Aufnehmen der Feststelleinrichtung gebildet ist.

Wie vorstehend bereits ausgeführt, ist zur Bewerkstelligung günstiger Hebelverhältnisse der Hebelarm zwischen dem Angriffspunkt des Betätigungsglieds 30 an den Klemmbacken 40 und der Kippachse des Kipplagers 50 wesentlich größer als der Hebelarm zwischen der Kippachse des Kipplagers 50 und dem Angriffspunkt der Klemmbacken 40 an der Achse A. Somit ist bei den beiden in den Figuren 6 und 7 gezeigten Ausführungsbeispielen durch die Klemmbacken 40 jeweils ein zweiarmiger Hebel gebildet.

Wie aus den Figuren 6 und 7 ersichtlich, werden die Aussparungsbohrungen insoweit versetzt zur Achsbohrung gebohrt, als der Mittelpunkt der Aussparung 910 in Richtung der Symmetrieachse des Metallblocks zum geschlossenen Ende des Gehäuses 90 hin versetzt gegen den Mittelpunkt der Achsbohrung verschoben ist. Hierdurch werden besonders günstige Hebelverhältnisse geschaffen, wobei der Hebelarm zwischen dem Angriffspunkt des Betätigungsglieds 30 an den Klemmbacken 40 und der Kippachse des Kipplagers 50 wesentlich größer als der Hebelarm zwischen der Kippachse des Kipplagers 50 und dem Angriffspunkt der Klemmbacken 40 ist.

## Patentansprüche

1. Feststelleinrichtung zum Feststellen einer eine gegebene Achsrichtung sowie einen gegebenen Durchmesser aufweisenden Achse (A), beispielsweise einer fest angeordneten Stange oder einer sich drehenden Welle, mit einem Gehäuse, mit einem über ein Fluid in einem Kolbenraum (K) betätigbaren Betätigungskolben (20), mit einem vom Betätigungskolben (20) bewegbaren Betätigungsglied (30) zum Angriff an zwei von diesem betätigbaren Klemmbacken (40) entgegen der Kraft mindestens einer Feder (10, 12) und zu deren Bewegen voneinander weg oder aufeinander zu von einer Feststellage für die Achse (A) in eine Freigabelage für die Achse (A), und mit einem Klemmbereich (60) zum kraftschlüssigen Angriff an der Achse (A) in der Feststellage, wobei der Klemmbereich (60) an den Klemmbacken (40) und an deren vom Betätigungsglied (30) abgewandten Endbereich vorgesehen ist, und
der Klemmbereich (60) in der Feststellage zur flächig, linienförmig und/oder punktuell klemmenden Anlage an der Oberfläche der Achse (A) unter deren gleichzeitiger spielfreier Zentrierung ausgebildet ist
**dadurch gekennzeichnet,**
**dass** das Gehäuse (90) je eine an die Form der zwei Klemmbacken (40) angepasste, diese sowohl in Richtung der Achse (A) als auch rechtwinklig dazu abstütztende Vertiefung oder eine Aussparung (910) aufweist,
**dass** jeder Klemmbacken (40) unter Bildung eines zweiarmigen Hebels mit einer Ausbuchtung (420) versehen ist,
**dass** jede Vertiefung oder Aussparung (910) zur Aufnahme der sich dazu komplementär ergänzenden Ausbuchtung (420) unter. Definition eines Kipplagers (50) eines der beiden Klemmbacken (40) ausgebildet ist,
**dass** sich die Kippachse des Kipplagers (50) im wesentlichen parallel zur Achsrichtung erstreckt,
und **dass** bei den zweiarmige Hebel bildenden Klemmbacken (40) jeweils der Hebelarm zwischen dem Angriffspunkt des Betätigungsglieds (30) an den Klemmbacken (40) und der Kippachse des Kipplagers (50) wesentlich größer als der Hebelarm zwischen der Kippachse des Kipplagers (50) und dem Angriffspunkt -Vertiefung oder Aussparung (910)- der Klemmbacken (40) an der Achse (A) ist.

2. Feststelleinrichtung gemäß Anspruch 1, **dadurch gekennzeichnet, dass** die als Kipplager dienende Aussparung (910) in dem Gehäuse oder einer Hülse (80) für den Betätigungskolben auf der von diesem abgewandten Seite vorgesehen ist.

3. Feststelleinrichtung gemäß Anspruch 2, **dadurch gekennzeichnet, dass** die zwei Klemmbacken (40) in dem Bereich der Aussparung (910) an deren Form angepasst sind und das Kipplager (50) die Klemmbacken (40) sowohl in Richtung der Kippachse als auch rechtwinklig dazu abstützt.

4. Feststelleinrichtung gemäß einem der Ansprüche 1 bis 3, **dadurch gekennzeichnet, dass** die Feder (10) im Bereich des Betätigungsglieds (30) und/oder im Bereich des Kipplagers (50) um die Klemmbacken (40) herumgelegt ist und sich seitlich, vorzugsweise an einer Hülse (80) für den Betätigungskolben (20) abstützt.

## Claims

1. Locking device for locking an axle (A), which comprises a given axial direction and a given diameter, for example, a rod mounted in a fixed manner or a rotating shaft,
with a housing, with a drive piston (20) capable of being driven by a fluid in a piston chamber (K), with a drive element (30), which can be moved by the drive piston (20) to act on two clamping jaws (40) capable of being driven by the latter against the force of at least one spring (10, 12), and to move them away from one another or towards one another from a locked position of the axle (A) into a released position of the axle (A), and with a clamping region (60) for the non-positive engagement on the axle (A) in the locked position, wherein the clamping region (60) is provided on the clamping jaws (40) and at their end region facing away from the drive element (30), and the clamping region (60) is designed to provide, in the locked position, an all-over, linear and/or point-like clamping contact on the surface of the axle (A), at the same time as centring the axle (A) in a play-free manner,
**characterised in that**
the housing (90) comprises an indentation or a recess (910) adapted to the shape of each of the two clamping jaws (40), and supporting them in the direction of the axle (A) and also at right angles to it,
that each clamping jaw (40) is provided with a bulge (420) thereby forming a two-arm lever,
that each indentation or recess (910) is formed to receive the bulge (420), matching it in a complementary manner and thereby defining a tilting bearing (50) for one of the two clamping jaws (40),
that the tilting axis of the tilting bearing (50) extends essentially parallel to the direction of the axle,
and that in the case of the clamping jaw (40) forming the two-arm lever, the lever arm between the point of application of the drive element (30) on the clamping jaw (40) and the tilting axis of the tilting bearing (50) is essentially longer in each case than the lever arm between the tilting axis of the tilting bearing (50) and the point of application - indentation or recess (910) - of the clamping jaw (40) on the axle (A).

2. Locking device according to claim 1
**characterised in that**
the recess (910) serving as the tilting bearing is provided in the housing or in a sleeve (80) for the drive piston at the end facing away from the latter.

3. Locking device according to claim 2,
**characterised in that**
the two clamping jaws (40) are adapted in the region of the recess (910) to its shape, and that the tilting bearing (50) supports the clamping jaws (40) in the direction of the tilting axis and also at right angles to it.

4. Locking device according to any one of claims 1 to 3,
**characterised in that**
the spring (10) encloses the clamping jaws (40) in the region of the drive element (30) and/or in the region of the tilting bearing (58) and is laterally supported preferably on a sleeve (80) for the drive piston (20).

## Revendications

1. Dispositif d'immobilisation destiné à immobiliser une direction d'axe donnée, ainsi qu'un axe (A) présentant un diamètre donné, par exemple, une barre disposée fixe ou un arbre rotatif, comprenant un boîtier, un piston d'actionnement (20) qui peut être actionné au moyen d'un fluide situé dans une chambre de piston (K), un organe d'actionnement (30) pouvant être déplacé par le piston d'actionnement (20) et destiné à attaquer deux mâchoires de serrage (40) pouvant être actionnées par cet organe d'actionnement, à l'encontre de la force d'au moins un ressort (10, 12) et à les déplacer l'un par rapport à l'autre dans le sens qui les éloigne ou qui les rapproche pour les faire passer d'une position d'immobilisation de l'axe (A) à une position de libération de l'axe (A), et une région de serrage (60) destinée à attaquer l'axe (A) par action de force dans la position d'immobilisation, la région de serrage (60) étant prévue sur les mâchoires de serrage (40) et sur la région terminale de celles-ci qui est éloignée de l'organe d'actionnement (30), et la région de serrage (60) étant formée, dans la position d'immobilisation, pour le contact intégral, linéaire et/ou ponctuel avec la surface de l'axe (A) établissant un serrage et en même temps un centrage sans jeu de cet axe,
**caractérisé en ce que** le boîtier (90) présente des approfondissements ou évidements (910) adaptés respectivement à la forme des deux mâchoires de serrage (40), qui donnent appui à ces dernières aussi bien selon la direction de l'axe (A) que perpendiculairement à ce dernier,
**en ce que** chaque mâchoire de serrage (40) est munie d'un bombement (420) avec formation d'un levier à deux bras,
**en ce que** chaque approfondissement ou évidement (910) est conformé pour recevoir le bombement (420) complémentaire de cet évidement, en définissant ainsi un palier de basculement (50) d'une des deux mâchoires de serrage (40),
**en ce que** l'axe de basculement du palier de basculement (50) s'étend sensiblement parallèlement à la direction de l'axe,
et **en ce que**, dans chacune des mâchoires de serrage (40) formant des leviers à deux bras, le bras de levier entre le point d'attaque de l'organe d'actionnement (30) sur les mâchoires de serrage (40) et l'axe de basculement du palier de basculement (50) est sensiblement plus grand que le bras de levier entre l'axe de basculement du palier de basculement (50) et le point d'attaque approfondissement ou évidement (910) - des mâchoires de serrage (40) sur l'axe (A).

2. Dispositif d'immobilisation selon la revendication 1, **caractérisé en ce que** l'évidement (910) qui sert de palier de basculement est prévu dans le boîtier ou dans une douille (80) prévue pour le piston d'actionnement, sur le côté qui est éloigné de celui-ci.

3. Dispositif d'immobilisation selon la revendication 2, **caractérisé en ce que** les deux mâchoires de serrage (40) sont adaptées dans la région de l'évidement (910) à la forme de ce dernier et le palier de basculement (50) donne pour cela appui aux mâchoires de serrage (40) aussi bien selon la direction de l'axe de basculement que perpendiculairement à cet axe.

4. Dispositif d'immobilisation selon une des revendications 1 à 3, **caractérisé en ce que** le ressort (10) entoure les mâchoires de serrage (40) dans la région de l'organe d'actionnement (30) et/ou dans la région du palier de basculement (50), et prend appui latéralement, de préférence sur une douille (80) prévue pour le piston d'actionnement (20).
